Europäisches Patentamt

European Patent Office

Office européen des brevets

(11) Publication number: 0 392 026
A1

## EUROPEAN PATENT APPLICATION
### published in accordance with Art. 158(3) EPC

(21) Application number: 89910176.0

(22) Date of filing: 13.09.89

(86) International application number:
PCT/JP89/00935

(87) International publication number:
WO 90/02647 (22.03.90 90/07)

(51) Int. Cl.5: B29C 63/34, B29C 63/36,
B32B 5/00, //B29K105:08,
B29L23:22

(30) Priority: 16.09.88 JP 121465/88 U

(43) Date of publication of application:
17.10.90 Bulletin 90/42

(84) Designated Contracting States:
DE FR GB SE

(71) Applicant: NKK CORPORATION
1-2, Marunouchi 1-chome Chiyoda-ku
Tokyo 100(JP)

(72) Inventor: HAGIO, Akira NKK Corporation
1-2, Marunouchi 1-chome Chiyoda-ku
Tokyo 100(JP)
Inventor: ONO, Yoshimi NKK Corporation
1-2, Marunouchi 1-chome Chiyoda-ku
Tokyo 100(JP)
Inventor: HONMA, Hiroshi NKK Corporation
1-2, Marunouchi 1-chome Chiyoda-ku
Tokyo 100(JP)
Inventor: OHYA, Hajime NKK Corporation
1-2, Marunouchi 1-chome Chiyoda-ku
Tokyo 100(JP)

(74) Representative: MEISSNER, BOLTE &
PARTNER
Widenmayerstrasse 48 Postfach 860624
D-8000 München 86(DE)

(54) TUBE USED FOR LINING OF CONDUIT.

(57) This invention relates to a tube used for lining of a conduit. The tube main body portion consists of an intermediate layer and outer and inner layer interposing the intermediate layers. The intermediate layer is formed by a felt impregnated with a resin while the outer and inner layers are formed by a reinforced fiber layer impregnated with a resin. An air-tight layer is disposed on one of or both of the inner and outer sides of the tube main body portion.

F I G. 3

- 1 -

S P E C I F I C A T I O N

## Tube for use as lining in a pipe

[Technical Field]

This invention relates to a tube for use as lining in a pipe. The tube is impregnate with resin. The tube is reversed, or turned inside out, as it is pushed into the pipe under a fluid pressure, and is attached to the inner surface of the pipe, is then heated, curing the resin, and is thereby adhered to the inner surface of the pipe, thus lining the pipe. Alternatively, the tube is inserted into the pipe, is expanded by means of pressurizing means, thus contacting the inner surface of the pipe, is then heated, curing the resin, and is thereby adhered to the inner surface of the pipe, thus lining the pipe.

[Background Art]

A lining method is used as a method of repairing old pipes such as water pipes and sewers. This method has such many advantages that long pipes can be easily lined within a short time, and pipes put under the ground can be repaired without being dug up.

A conventional tube used as lining of a pipe is shown in Figs. 7 and 8. Figs. 7 and 8 each show a cross-sectional view of a part of the tube used in the conventional method of lining a pipe.

In Fig. 7, the tube 20 comprises a cylindrical felt member made of non-woven fabric 21 such as polyester fabric or the like and an airtight layer 5 made of vinyl chloride, polyurethane or the like adhered to the outer surface of the felt 21. The felt 21 is impregnated with thermosetting resin such as polyester resin or epoxy resin.

In Fig. 8, a tube comprlses a cylindrical woven fabric member 23 made of polyester fabric and an airtight layer 5 made of polyolefine or the like and adhered to the outer surface of the woven fabric member 23. The woven fabric 23 is coated with an adhesive made of an epoxy resin group.

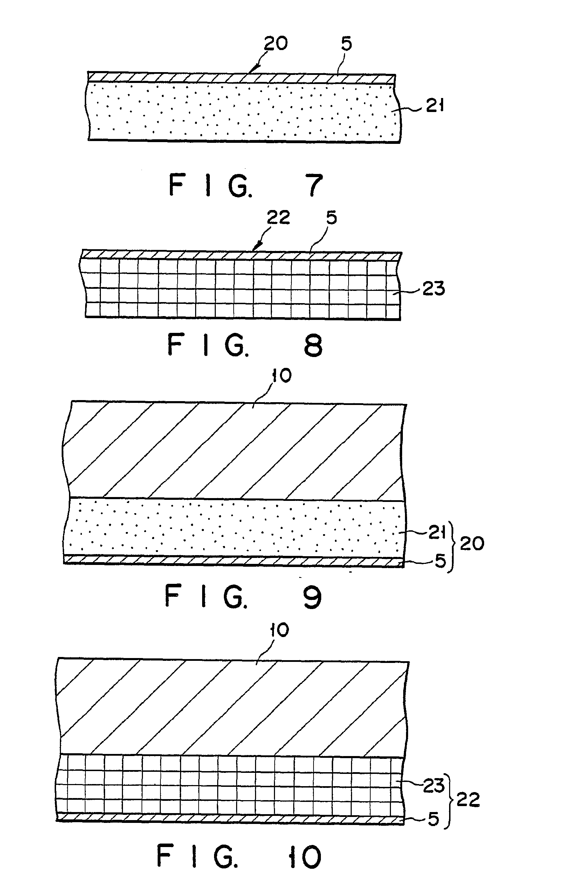

Figs. 9 and 10 show pipes whose inner surfaces are lined with the tubes shown in Figs. 7 and 8, respectively. The tubes 20 and 22 are reversed and inserted in the pipe so as to be attached to the inner surface of the pipe line. Thereafter, the resin is cured by the heated fluid introduced in the pipe, forming a new layer (repairing layer) adhered to the inner surface of the pipe.

Some pipes to be repaired have cracks reaching its outer surface, or some couplings have been disengaged from the pipes. In this case, the lined new layer on the inner surface of the pipe line is applied with the external pressures such as the external water pressure and the soil pressure. Therefore, the new layer must be strong enough to bear these external forces, and also have a sufficient bending strength. Even if the external pressures are not applied to the inner portion the pipe at the time of repair, the pipe needs to have similar strength to avoid damages which would be produced in the future.

However, the conventional tube has a small strength after curing, and has the risk of being broken when it is used while external pressures are exerted on the pipe.

In other words, in the tube having a felt member as shown in Fig. 7, the felt fibers are arranged at random, and thus it does not reinforce the impregnated resin. Accordingly, when the resin is cured after it has been impregnated in the felt, the resin is in a state as if it were mixed with impurities, and the tensile strength is approximately 3 to 4 kgf/mm$^2$ when the resin is, for example, epoxy resin. This value is lower than the tensile strength 5 kgf/mm$^2$ of the resin itself.

In the tube using woven fabric as shown in Fig. 8, the adhesive applied to the fabric does not permeate into the fabric and is not contained in it in a sufficient amount. As a result, the tensile strength of only about 3 kgf/mm$^2$ can be obtained after curing.

This invention is intended to solve the above problems occurring to the prior art. Its object is to provide a tube used in a pipe lining method and adapted to form in the pipe a new layer having a high tensile strength.

[Disclosure of the Invention]

In order to obtain this object, a tube used in a method of lining a pipe comprises reinforcing fabric layers impregnated with resin and forming the outer and inner surfaces of the tube, and felt impregnated with resin and forming an intermediate layer sandwiched between the outer and inner surfaces.

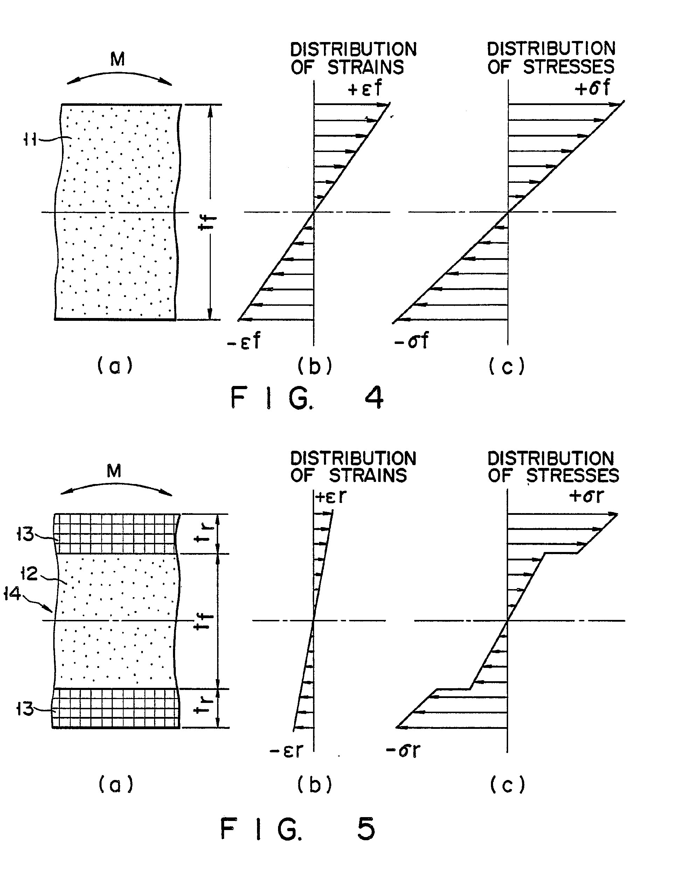

The provision of the reinforcing fabric layer impregnated with resin enables the bending strength and bending rigidity to be remarkably enhanced after curing. It will be explained in detail how the strength is increased by the reinforcing fabric layer with reference to Fig. 4 and 5.

Fig. 4 denotes diagrams of strains and stress distributions when bending moments are applied to a felt member impregnated with resin already cured. Fig. 5 indicates diagrams strains and stress distributions observed when bending moments are applied to felt member having, on its outer and inner surfaces, fabric impregnated with resin already cured. In Figs. 4 and 5, (a) are cross-sectional views of the cured bodies, (b) show the strains distributions and (c) illustrate the stress distributions.

As can be understood from Figs. 4(a), 4(b) and 4(c), when a bending moment M is applied to a cured body 11 having a thickness $t_f$, the body 11 will have greater strains $+ \varepsilon_f$ and $- \varepsilon_f$ in the outer and inner portions than in the intermediate portion, and will have greater stresses $+ \sigma_f$ and $- \sigma_f$ in the outer and inner portions than in the intermediate portion.

As shown in Fig. 5(a), 5(b) and 5(c), when the bending moment is applied to a cured body 14 which comprises a felt member 12 having thickness $t_f$ and a woven fabric layer 13 having thickness $t_r$, the strains $+ \varepsilon_r$, $- \varepsilon_r$ in the outer and inner portions the cured body 14 are extremely small as compared with the strains $+ \varepsilon_f$, $- \varepsilon_f$ in the cured body 11 having a felt member impregnated with resin, as is shown in Fig. 4(b), and the bending modulus is greatly increased.

Since the strains and stresses produced in the cured object are large in the outer and inner portions and small in the intermediate portion, the bending strength of the tube can be effectively enhanced only by reinforcing the outer and inner portions. Based on this technical knowledge, the tube of this invention has, on its outer and inner surfaces, reinforcing fabric layers impregnated with resin.

The felt member forming the intermediate portion ensures the strength of the reinforcing fabric layers formed on the outer and inner surfaces of the felt. In the conventional method, when the tube is turned inside out and inserted into the pipe, the folded portion of the tube is pressed and the impregnated resin drops. Hence, the amount of resin contained in the reinforcing fabric layers, which can hold but a small amount of resin, is sometimes reduced to lower the strength after curing. However, when the felt member is arranged in the intermediate portion, much resin is impregnated in the felt. As a result, the resin is supplied to the reinforcing fabric layer, and a decrease in the strength of the reinforcing fabric layer can be prevented.

[Brief Description of the Drawings]

Fig. 1 is a longitudinal sectional view of one embodiment of the tube used in a method of lining a pipe according to this invention;

Fig. 2 is a longitudinal sectional view of another embodiment of the tube used in a method of lining a pipe according to this invention;

Fig. 3 is a traverse sectional view of a pipe, the inner face of which is lined with a tube according to this invention;

Fig. 4 is distribution diagrams of strains and stresses of a cured body whose felt is impregnated with resin when a bending moment is exerted onto the cured body;

Fig. 5 is distribution diagrams of strains and stresses which a cured body comprising a resin-impregnated felt member and woven fabric members impregnated with resin and formed on the outer and inner surfaces of the felt member, when a bending moment is applied to the cured body;

Fig. 6 shows an embodiment of the manufacturing process of a tube according to this invention;

Figs. 7 and 8 are longitudinal sectional views of parts of tubes used in the conventional method of lining a pipe; and

Figs. 9 and 10 show the examples in which pipes are lined with the tubes of Fig. 7 and 8, respectively.

[Embodiments]

This invention will be explained by way of the following embodiments.

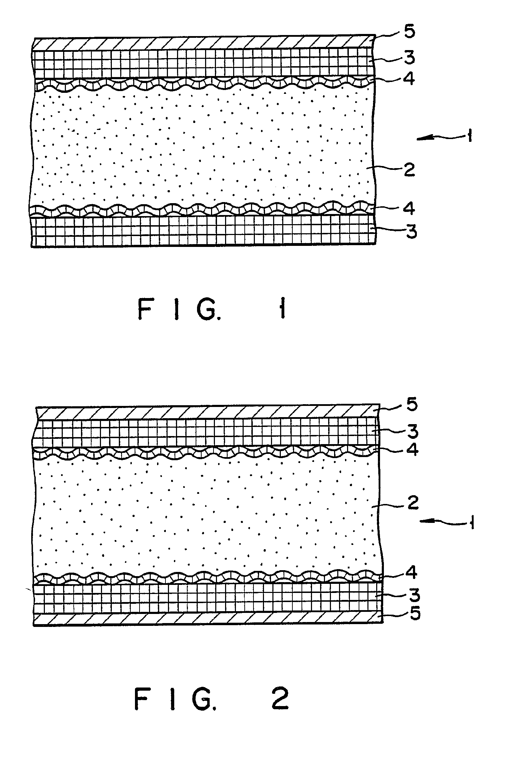

Fig. 1 is a longitudinal sectional view of one embodiment of the tube used in a method of lining a pipe.  In Fig. 1, a tube 1 comprises three layers formed by felt (non-woven fabric) 2 impregnated with resin, a reinforcing fabric layer 3 impregnated with resin, a boundary reinforcing fabric layer 4 impregnated with resin and an airtight layer 5.  In the figure, the upper surface is the outer surface, and the lower surface is the inner surface.

Felt 2 is made of non-woven fabric such as non-woven polyester fabric and is impregnated with thermosetting resin such as polyester resin or epoxy resin. The thickness of the felt 2 is determined by the strength required for the cured tube 1.

The reinforcing fabric layer 3 is made of fabric such as glass fibers or carbon fibers, synthetic fibers such as polyester fibers, polyethylene fibers or aramide fibers, metal fibers made of such as stainless steel, or hybrid fabric consisting of any combination of these fibers.  The woven fabric used in this specification is defined as general term of woven fabric which includes textile fabric, knitted fabric, braided fabric and the like which are made of monofilaments or filaments formed by twisting a lot of monofilaments.  In order to increase the bending strength, it is preferred that fibers having a higher strength such as glass fibers or aramide fibers be used as wefts (filaments arranged circumferentially of the tube) and relatively inexpensive polyester fibers be used as warps (filaments arranged axially of the tube).  The reinforcing fabric layer 3 are composed of one or more layers of the above-mentioned woven fabrics.  The thickness of the reinforcing fabric layer 3, the diameter of the filaments of the fabric forming the reinforcing fabric layer 3, the distances between the wefts and between the warps, the intersecting angel between the wefts and warps and the like are determined depending on the designed strength of the tube 1.  Similarly to the felt 2, the reinforcing fabric layer 3 is also impregnated with thermosetting resin such as polyester resin or epoxy resin.

The strength of the reinforcing fiber layer 3 after curing is very high. One of the experimental results of the strength measurements for cured tubes each having a glass fabric impregnated with resin showed such high values that the tensile strength was 30 to 60 kgf/mm$^2$ and the tensile elastic module was 2000 to 2400 kgf/mm$^2$.

The boundary reinforcing fabric layer 4 is provided between the felt 2 and the reinforcing fabric layer 3 and is made of woven fabric, a mat or non-woven fabric consisting of such fabric having a high strength as glass fiber, carbon fiber, synthetic fiber such as acrylonitrile fiber or aramide fiber, metallic fiber made of stainless steel or the like, or hybrid fabric consisting of any combination of the above-mentioned fibers which are impregnated with thermosetting resin such as polyester resin or epoxy resin. When the boundary fabric layer 4 is woven fabric, fiber having a particularly high strength must be used as the wefts (fibers arranged circumferentially of the tube) which require a very high strength. The boundary reinforcing fiber layer 4 is adapted to prevent the layer of the felt 2 and the reinforcing fiber layer 3 from being separated from each other due to the shearing occurring therebetween. In order to increase the shearing resistance at the boundary between the layer of the felt 2 and the reinforcing fabric layer 3, the boundary reinforcing fiber layer 4 may be preferably gently waved along these two layers.

The airtight layer 5 comprises a film made of vinyl chloride, polyurethane or the like and is affixed to the outer surface of the outer reinforcing fabric layer 3 by an adhesive.

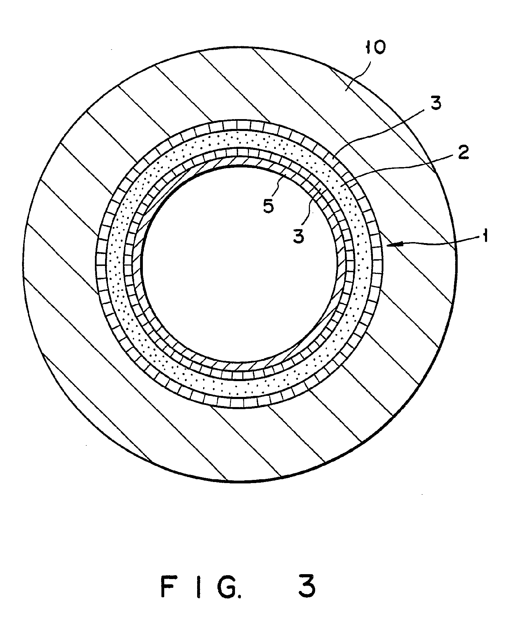

The airtight layer 5 is not limited to the one provided on the outer surface of the tube 1. When the tube is reversed and inserted in the tube so as to be lined on the inner face of the pipe, the airtight layer 5 is required to be adhered onto the outer surface of the tube, as shown in Fig. 1. In the case, however, when the tube is inserted, as it is, without being reversed, the airtight layer is adhered to the inner face of the tube. Upon lining the pipe, it is not always required that the pipe and the tube 1 be adhered to each other. Since this invention is intended to form a new layer on the inner face of the pipe, the airtight layers 5 may be formed on the inner and outer faces of the tube, as shown in Fig. 2 when the process in which the tube is inserted as it is without being reversed. The tube 1 provided on the inner and outer surface with the air- tight layers 5 has the advantages that the impregnated resin does not drop and thus the amount of resin is not reduced.

The tube 1 as constructed above is inserted in the pipe with or without being reversed and is heated by very hot water or water vapor flowing through the tube 1 under pressure. The impregnated resin is cured to form a new layer in the pipe. Fig. 3 is a traverse section of a pipe lined with the tube. In Fig. 3, the tube 1 manufactured by lining the reversed tube 1 on the inner face of the pipe comprises the felt 2, the resin in which is cured, the reinforcing fiber layer 3, resin in which is cured, and the airtight layer 5. Since the tube 1 is inserted in the pipe 10 in the reversed manner, the air tight layer 5 is on the inner face of the tube. It is noted that the tube 1 is adhered to the inner face of the pipe 10.

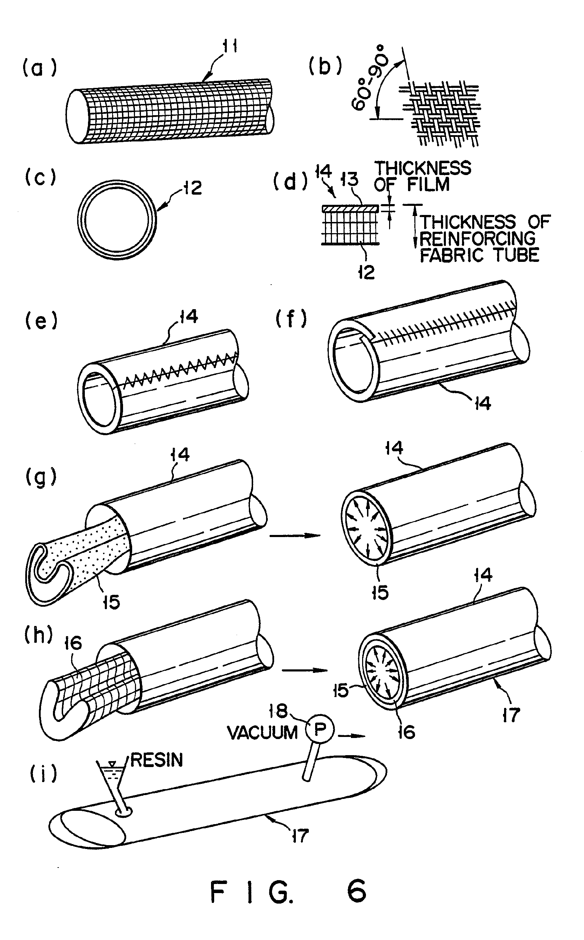

The tube according to this invention can be manufactured according to the processes shown in Figs. 6(a) to 6(i).

Fig. 6(a) shows how to form, by means of a circular weaving machine, a cylindrical cloth member 11 consisting of wefts made of glass fiber and warps made of polyester fiber. The main portion of cloth member is illustrated on a large scale in Fig. 6(b), as is shown, the coinciding angle between the wefts and warps are selected to be 60 to 90 degrees so that any portion of the member can expand to have the same diameter the positions of the layers in the pipe.

Fig. 6(c) illustrates a reinforcing fabric layer 12 which comprises a required number of cylindrical cloth members manufactured by the method explained with reference to Fig. 6(a). The tubes are made of cloth and mounted coaxially one upon another (each tube having a wall thickness of 0.1 to 1.0 mm).

Fig. 6(d) shows a reinforcing fabric layer 12 which constitutes an inner layer when the pipe is lined and is formed with a vinyl chloride film or a polyurethane film 13 on the face consisting of the inner face of the tube, thereby making a tube 14.

The felt plate is rounded and its side edges are caused to abut against each other as shown in Fig. 6(e) or overlap each other as shown in Fig. 6(f). Then, the seamed portions are sewed together to form a felt tube 14.

In Fig. 6(g), a felt tube 15 is inserted in an outer reinforcing fabric tube, expanded and partially adhered thereto.

In Fig. 6(h), an inner reinforcing fabric tube 16 is inserted in the felt tube 15 of Fig. 6(g), expanded and partially adhered thereto to form a multi-layered tube 17.

Fig. 6(i) shows a process in which the multi-layered tube 17 is evacuated at its one end by a vacuum pump 18 and, at the same time, resin is impregnated from the other end of the tube 17.

The tube impregnated with resin which has been manufactured in any of the above-mentioned processes is pulled in the pipe which have already provided under the ground, or inserted the pipe in a reversed state, and closely contacted with the pipe by means of a fluid pressure or the like.

Thereafter, hot water is circulated on the inner face of the tube to thermally set the resin.

The tube used in a method of lining a pipe according to this invention comprises multi-layers consisting of reinforcing fabric layers impregnated with resin and an intermediate layer made of felt impregnated with resin. Since the reinforcing fabric layers impregnated with resin are provided on the inner and outer surfaces, the tube has a high bending strength and a high bending modulus, whereby the tube can be used as a lining member for a pipe to which a large eternal force is applied.

If the tube of this invention which is required to have the same strength as the conventional tube is to be manufactured, the thickness of the tube of this invention can be reduced by about 1/2 to 1/10 from that of the conventional tube. As only the outer and inner surface are formed with reinforcing fabric layers, the tube of this invention can be manufactured at a lower cost than the tube whose layers are all made of reinforcing fabric layers, if both tubes have the approximately same strength. In the conventional process in which the tube is reversed and inserted in the pipe, resin drops and the content of the resin in the reinforcing fabric layers is reduced. With the tube of this invention, however, the intermediate layer is made of felt in which much resin is impregnated. Therefore, the resin is supplied to the reinforcing fabric layers, and this prevents the strength of the reinforcing fabric layers to be lowered.

- 1 -

Claims:

1. A tube for use as lining in a pipe, having a tube body comprising an intermediate layer and an outer layer and an inner layer which sandwich said intermediate layer, said intermediate layer being made of felt impregnated with resin, said outer and inner layers being made of reinforcing fabric impregnated with resin.

2. The tube according to claim 1, characterized by further comprising an airtight layer provided around said tube body.

3. The tube according to claim 1, characterized by further comprising an airtight layer provided in said tube body.

4. The tube according to claim 1, characterized by further comprising airtight layers provided around and in said tube body.

5. The tube according to claim 1, characterized by further providing boundary reinforcing fabric layer between said intermediate layer and said outer layer and between said intermediate layer and said inner layer.

6. The tube according to claim 2, characterized by further providing boundary reinforcing fabric layers between said intermediate layer and said outer layer and between said intermediate layer and said inner layer.

7. The tube according to claim 3, characterized by further providing boundary reinforcing fabric layers between said intermediate layer and said outer layer and between said intermediate layer and said inner layer.

8. The tube according to claim 4, characterized by further providing boundary reinforcing layers between said intermediate layer and said outer layer and between said intermediate layer and said inner layer.

F I G.   1

F I G.   2

F I G. 3

F I G. 4

F I G. 5

(a) 11

(b) 60°-90°

(c) 12

(d) 14 13 THICKNESS OF FILM
THICKNESS OF REINFORCING FABRIC TUBE
12

(e) 14

(f) 14

(g) 14 14
15 15

(h) 14
16
15 17
16

(i) 18
VACUUM P
RESIN
17

F I G. 6

20    5

21

F I G.    7

22    5

23

F I G.    8

10

21
    } 20
5

F I G.    9

10

23
    } 22
5

F I G.    10

# INTERNATIONAL SEARCH REPORT

International Application No  PCT/JP89/00935

## I. CLASSIFICATION OF SUBJECT MATTER (if several classification symbols apply, indicate all) 6

According to International Patent Classification (IPC) or to both National Classification and IPC

Int. Cl$^4$  B29C63/34, 63/36, B32B5/00,
B29K105:08, B29L23:22

## II. FIELDS SEARCHED

| Minimum Documentation Searched 7 | |
|---|---|
| Classification System : | Classification Symbols |
| IPC | B29C63/34, 63/36, B32B5/00 |

Documentation Searched other than Minimum Documentation
to the Extent that such Documents are Included in the Fields Searched 8

| | |
|---|---|
| Jitsuyo Shinan Koho | 1957 – 1988 |
| Kokai Jitsuyo Shinan Koho | 1971 – 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 59-225920 (Tokyo Gas Co., Ltd.) 19 December 1984 (19. 12. 84) Claim and page 3, upper right column, line 17 to page 5, upper left column, line 9 (Family : none) | 1 – 4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 5, 1989 (05. 12. 89) | December 11, 1989 (11. 12. 89) |
| International Searching Authority | Signature of Authorized Officer |
| Japanese Patent Office | |

Form PCT/ISA/210 (second sheet) (January 1985)